# EUROPEAN PATENT APPLICATION

(11) **EP 4 503 735 A1**
(43) Date of publication of application: **05.02.2025**
(21) Application number: 23795418.5
(22) Date of filing: 25.04.2023
(51) Int. Cl.: H04W 36/00

(54) **CALL SWITCHING METHOD AND APPARATUS, AND ELECTRONIC DEVICE**

(30) Priority: 26.04.2022 CN 202210449792
(71) Applicant: Vivo Mobile Communication Co., Ltd., Dongguan, Guangdong 523863 (CN)
(72) Inventor: MAO, Yuanze, Dongguan, Guangdong 523863 (CN)
(74) Representative: Murgitroyd & Company
(86) International application number: PCT/CN2023/090609
(87) International publication number: WO 2023/207986

(57) **Abstract**

This application pertains to the communication field, and discloses a call handover method and apparatus, and an electronic device. The method is applied to a first electronic device and includes: receiving a first message in a process of a first call between the first electronic device and a second electronic device, where the first message is used to indicate handover of the first call to a third electronic device, and the third electronic device has a communication connection with the first electronic device; sending call hold signaling to a server; and after receiving call hold feedback signaling from the server, holding a communication connection with the second electronic device through the server, and stopping sending call data of the first call to the server.

## Description

### CROSS-REFERENCE TO RELATED APPLICATION

This application claims priority to Chinese Patent Application No. 202210449792.5, filed in China on April 26, 2022, which is incorporated herein by reference in its entirety.

### TECHNICAL FIELD

This application pertains to the field of communication technologies, and specifically relates to a call handover method and apparatus, and an electronic device.

### BACKGROUND

With development of electronic technologies, more electronic devices of different types have call functions. For example, a smartphone, a smartwatch, and a smart tablet computer all have call functions.

In the related art, a user may need to use a plurality of different electronic devices simultaneously, and the different electronic devices have wireless connection functions. Therefore, the different electronic devices can be wirelessly connected to each other and further read data information from each other or synchronize data information with each other, so that the user can conveniently operate the plurality of electronic devices when using any one of the devices. For example, when a smartphone and a smartwatch are used simultaneously, and the smartwatch and the smartphone have wireless connection functions, after the smartwatch is connected to the smartphone, the user may send a short message by using the smartwatch, or may obtain health data in the smartwatch by using the smartphone and then complete a related operation. However, in a case that the plurality of electronic devices receive an incoming call simultaneously, the user can only choose to connect the call on one device.

In this case, when the user requires handover between different electronic devices to connect the call in the call process, the user can complete the handover only by hanging up the call process of the electronic device that currently connects the call and then reconnecting the call by using another electronic device, hence causing problems that continuity of call handover is insufficient and steps are complex.

### SUMMARY

An objective of embodiments of this application is to provide a call handover method and apparatus, and an electronic device to resolve problems that when handover is performed between different electronic devices to connect a call, continuity of call handover is insufficient and steps are complex because the handover can be completed only by hanging up a call process of an electronic device that currently connects the call and then reconnecting the call by using another electronic device.

According to a first aspect, an embodiment of this application provides a call handover method, applied to a first electronic device. The method includes: receiving a first message in a process of a first call between the first electronic device and a second electronic device, where the first message is used to indicate handover of the first call to a third electronic device, and the third electronic device has a communication connection with the first electronic device; sending call hold signaling to a server; and after receiving call hold feedback signaling from the server, holding a communication connection with the second electronic device through the server, and stopping sending call data of the first call to the server, where the call hold signaling is used to request to hold the communication connection between the first electronic device and the second electronic device; and the call hold feedback signaling is used to indicate holding the communication connection between the first electronic device and the second electronic device.

According to a second aspect, an embodiment of this application provides a call handover method, applied to a server. The method includes: receiving call hold signaling from a first electronic device in a process of a first call between the first electronic device and a second electronic device, where the first electronic device has a communication connection with a third electronic device; sending call handover signaling to the third electronic device in a case that a communication connection is held between the first electronic device and the second electronic device; and receiving call handover feedback signaling from the third electronic device, where the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

According to a third aspect, an embodiment of this application provides a call handover method, applied to a third electronic device. The method includes: receiving call handover signaling sent by a server in a process of a first call between a first electronic device and a second electronic device, where a communication connection is held between the first electronic device and the second electronic device; and sending call handover feedback signaling to the server, where the call handover signaling is used to request to hand over the first call to the third electronic device, and the call handover feedback signaling is used to indicate that the first call has been handed over to the third electronic device.

According to a fourth aspect, an embodiment of this application provides a call handover method, applied to a second electronic device. The method includes: receiving call hold signaling sent by a first electronic device through a server in a process of a first call between the first electronic device and the second electronic device, where the call hold signaling is used to request to hold a communication connection between the first electronic device and the second electronic device, and the first electronic device has a communication connection with a third electronic device; and sending call hold feedback signaling to the server, where the call hold feedback signaling is used to indicate holding the communication connection between the first electronic device and the second electronic device.

According to a fifth aspect, an embodiment of this application provides a call handover apparatus. The apparatus includes: a sending module, configured to receive a first message in a process of a first call between a first electronic device and a second electronic device, where the first message is used to indicate handover of the first call to a third electronic device, and the third electronic device has a communication connection with the first electronic device, where the sending module is further configured to send call hold signaling to a server; and a holding module, configured to: after call hold feedback signaling is received from the server, hold a communication connection with the second electronic device through the server, and stop sending call data of the first call to the server, where the call hold signaling is used to request to hold the communication connection between the first electronic device and the second electronic device; and the call hold feedback signaling is used to indicate holding the communication connection between the first electronic device and the second electronic device.

According to a sixth aspect, an embodiment of this application provides a call handover apparatus. The apparatus includes: a receiving module, configured to receive call hold signaling from a first electronic device in a process of a first call between the first electronic device and a second electronic device, where the first electronic device has a communication connection with a third electronic device; and a sending module, configured to send call handover signaling to the third electronic device in a case that a communication connection is held between the first electronic device and the second electronic device, where the receiving module is further configured to receive call handover feedback signaling fed back by the third electronic device, where the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

According to a seventh aspect, an embodiment of this application provides a call handover apparatus. The apparatus includes: a receiving module, configured to receive call handover signaling sent by a server in a process of a first call between a first electronic device and a second electronic device, where a communication connection is held between the first electronic device and the second electronic device; and a sending module, configured to send call handover feedback signaling to the server, where the call handover signaling is used to request to hand over the first call to a third electronic device, and the call handover feedback signaling is used to indicate that the first call has been handed over to the third electronic device.

According to an eighth aspect, an embodiment of this application provides a call handover apparatus. The apparatus includes: a receiving module, configured to receive call hold signaling sent by a first electronic device through a server in a process of a first call between the first electronic device and a second electronic device, where the call hold signaling is used to request to hold a communication connection between the first electronic device and the second electronic device, and the first electronic device has a communication connection with a third electronic device; and a sending module, configured to send call hold feedback signaling to the server, where the call hold feedback signaling is used to indicate holding the communication connection between the first electronic device and the second electronic device.

According to a ninth aspect, an embodiment of this application provides an electronic device. The electronic device includes a processor and a memory. A program or instructions are stored in the memory and executable on the processor. When the program or instructions are executed by the processor, the steps of the method according to the first aspect, the second aspect, the third aspect, or the fourth aspect are implemented.

According to a tenth aspect, an embodiment of this application provides a readable storage medium. The readable storage medium stores a program or instructions. When the program or instructions are executed by a processor, the steps of the method according to the first aspect, the second aspect, the third aspect, or the fourth aspect are implemented.

According to an eleventh aspect, an embodiment of this application provides a chip. The chip includes a processor and a communication interface. The communication interface is coupled to the processor. The processor is configured to run a program or instructions to implement the method according to the first aspect, the second aspect, the third aspect, or the fourth aspect.

According to a twelfth aspect, an embodiment of this application provides a computer program product. The program product is stored in a storage medium. The program product is executed by at least one processor to implement the method according to the first aspect, the second aspect, the third aspect, or the fourth aspect.

In the embodiments of this application, in the process of the first call between the first electronic device and the second electronic device, after receiving the first message used to indicate handover of the first call to the third electronic device, the first electronic device sends the call hold signaling to the server, where the third electronic device has a communication connection with the first electronic device; and after receiving the call hold feedback signaling sent by the server, the first electronic device holds the communication connection with the second electronic device through the server, and stops sending the call data of the first call to the second electronic device through the server. In this way, by using the call hold signaling to trigger holding of the first call, that is, to suspend transmission of the call data before the handover, the first electronic device can complete the call handover only by triggering the call hold signaling without hanging up the call. Further, the call data is not lost, and the seamless handover of the first call between the two terminals in a real sense is implemented while integrity of the call data is ensured.

### BRIEF DESCRIPTION OF DRAWINGS

FIG. 1 is a first schematic flowchart of a data transmission method according to an embodiment of this application;
FIG. 2 is a second schematic flowchart of a data transmission method according to an embodiment of this application;
FIG. 3 is a third schematic flowchart of a data transmission method according to an embodiment of this application;
FIG. 4 is a fourth schematic flowchart of a data transmission method according to an embodiment of this application;
FIG. 5 is a first schematic diagram of a data transmission method according to an embodiment of this application;
FIG. 6 is a second schematic diagram of a data transmission method according to an embodiment of this application;
FIG. 7 is a first schematic diagram of a structure of a data transmission apparatus according to an embodiment of this application;
FIG. 8 is a second schematic diagram of a structure of a data transmission apparatus according to an embodiment of this application;
FIG. 9 is a third schematic diagram of a structure of a data transmission apparatus according to an embodiment of this application;
FIG. 10 is a fourth schematic diagram of a structure of a data transmission apparatus according to an embodiment of this application;
FIG. 11 is a first schematic diagram of a structure of an electronic device according to an embodiment of this application;
FIG. 12 is a second schematic diagram of a structure of an electronic device according to an embodiment of this application; and
FIG. 13 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

A call handover method provided in the embodiments of this application is hereinafter described in detail by using specific embodiments and application scenarios thereof with reference to the accompanying drawings.

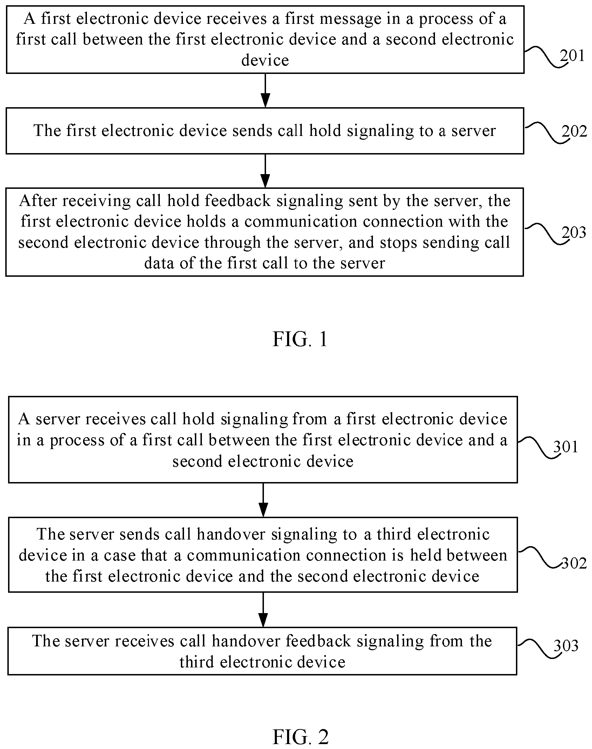

An embodiment provides a call handover method. As shown in FIG. 1, the call handover method is applied to a first electronic device and includes the following step 201 to step 203.

Step 201: The first electronic device receives a first message in a process of a first call between the first electronic device and a second electronic device.

In this embodiment of this application, the first message is used to indicate handover of the first call to a third electronic device.

In this embodiment of this application, the third electronic device has a communication connection with the first electronic device.

It may be understood that, firstly, in the process of the first call between the first electronic device and the second electronic device, if the call needs to be handed over from the first electronic device to the third electronic device, the first message needs to be sent to the first electronic device. Further, sending of the first message may be triggered by a user. For example, if the user needs to hand over the current call from the first electronic device to the third electronic device, the user may perform an operation on the first electronic device to send the first message to the first electronic device, and after the first electronic device receives a first input, the call is handed over. Alternatively, sending of the first message is triggered by the first electronic device itself, for example, due to excessively low power of the first electronic device or damage of the first electronic device. For details, refer to the following content.

Secondly, at an initial call stage, that is, at a stage in which the second electronic device wants to establish a call with the first electronic device, the second electronic device sends call signaling only to the first electronic device, the first electronic device may send the call signaling to the third electronic device because of the communication connection between the first electronic device and the third electronic device, and the third electronic device sends call signaling feedback information back to the first electronic device. Further, the first electronic device sends the call signaling feedback information to the second electronic device through a server. In this case, both the third electronic device and the first electronic device can establish a call with the second electronic device, that is, the user can choose to establish the call from either the third electronic device or the first electronic device.

Step 202: The first electronic device sends call hold signaling to the server.

In this embodiment of this application, the third electronic device has a communication connection with the second electronic device.

In this embodiment of this application, the first electronic device and the second electronic device are both call devices. The first electronic device may be an electronic device at a call receiving end or an electronic device at a call initiating end. The second electronic device may be an electronic device at the call receiving end or an electronic device at the call initiating end. The first electronic device and the second electronic device are electronic devices at different ends.

In this embodiment of this application, the third electronic device is an electronic device at the same end as the first electronic device. To be specific, when the first electronic device is an electronic device at the call receiving end, the third electronic device is also an electronic device at the call receiving end; or when the first electronic device is an electronic device at the call initiating end, the third electronic device is also an electronic device at the call initiating end.

It should be noted that although the third electronic device and the first electronic device are both electronic devices at the same end (for example, both are at a call receiving end or a call initiating end), the third electronic device does not directly connect to the first call, that is, the third electronic device does not directly receive call data of the first call. The communication connection between the third electronic device and the first electronic device proceeds through transmission of call signaling.

In an embodiment, the first electronic device and the third electronic device may be respectively two terminals at the call receiving end or the call initiating end, for example, two mobile phones, or one mobile phone and one smartwatch, or one mobile phone and one intelligent computer. The second electronic device may be any terminal, for example, a mobile phone, or a smartwatch, or an intelligent computer.

Further, the communication connection between the first electronic device and the third electronic device may be a wireless connection, for example, WLAN, or may be connected by Bluetooth.

In this embodiment of this application, the first call may be an IMS call performed by using the session initiation protocol (Session Initiation Protocol, SIP).

In this embodiment of this application, the need to hand over the first call from the first electronic device to the third electronic device means that before step 201, the first electronic device and the second electronic device are in a call state of the first call, that is, the call data of the first call is transmitted between the first electronic device and the second electronic device, and when step 201 is performed, the call transmission process of the first call needs to be handed over from between the first electronic device and the second electronic device to between the first electronic device and the third electronic device.

In this embodiment of this application, the call hold signaling is used to request to hold a communication connection between the first electronic device and the second electronic device.

It may be understood that in this embodiment of this application, the call hold signaling may be used to trigger a call handover process between the first electronic device and the third electronic device. Specifically, the call hold signaling is used to request to suspend the call data transmission between the first electronic device and the second electronic device, that is, to request to only hold the communication connection between the first electronic device and the second electronic device until the handover succeeds.

Step 203: After receiving call hold feedback signaling sent by the server, the first electronic device holds the communication connection with the second electronic device through the server, and stops sending the call data of the first call to the server.

In this embodiment of this application, the call hold feedback signaling is used to indicate holding the communication connection between the first electronic device and the second electronic device.

It may be understood that after the first electronic device sends the call hold signaling to the server, the server forwards the call hold signaling to the second electronic device. The second electronic device performs feedback based on the call hold signaling to generate the call hold feedback signaling, where the call hold feedback signaling may indicate that a current status of the second electronic device is an on-hold state.

In an embodiment, that a status of the second electronic device is an on-hold state means that a port of the second electronic device is in a receive-only (receive only) state. The receive-only state means that the second electronic device only receives call data sent by the first electronic device, and no longer sends call data to the first electronic device.

Further, the second electronic device is in the receive-only state specifically for only the second electronic device. For the third electronic device, the second electronic device is not in the receive-only state, but in a receivable and sendable state, that is, the second electronic device can not only receive data sent by the third electronic device, but also send data to the third electronic device.

It should be noted that, firstly, although the communication port of the second electronic device is in the receivable and sendable state for the third electronic device, the receivable and sendable state cannot be implemented between the second electronic device and the third electronic device before completion of the entire handover process, and the receivable and sendable state can be really implemented between the communication port of the second electronic device and the third electronic device only after completion of the entire handover process (that is, the third electronic device agrees to receive call data of the second electronic device and also agrees to send call data to the second electronic device).

Secondly, the communication port of the second electronic device adjusts its state to the receive-only state, or a send-only state, or the receivable and sendable state for only receiving, or only sending, or being capable of sending and receiving the call data, but communication signaling between different electronic devices is always in the receivable and sendable state.

In this embodiment of this application, the communication connection between the first electronic device and the second electronic device means: the first electronic device only receives the call data of the second electronic device, and the second electronic device no longer sends the call data to the first electronic device, while call signaling transmission is held between the first electronic device and the second electronic device.

In the call handover method provided in this embodiment of this application, in the process of the first call between the first electronic device and the second electronic device, after receiving the first message used to indicate handover of the first call to the third electronic device, the first electronic device sends the call hold signaling to the server, where the third electronic device has a communication connection with the first electronic device; and after receiving the call hold feedback signaling sent by the server, the first electronic device holds the communication connection with the second electronic device through the server, and stops sending the call data of the first call to the second electronic device through the server. In this way, by using the call hold signaling to trigger holding of the first call, that is, to suspend transmission of the call data before the handover, the first electronic device can complete the call handover only by triggering the call hold signaling without hanging up the call. Further, the call data is not lost, and the seamless handover of the first call between the two terminals in a real sense is implemented while integrity of the call data is ensured.

Optionally, in this embodiment of this application, the receiving a first message in the foregoing step 201 includes either of the following: receiving a first input and receiving a message that a power parameter of the first electronic device is lower than a first threshold.

For example, the first input is used to indicate the first message to the first electronic device.

For example, the first input is used to hand over the first call from the first electronic device to the third electronic device.

In an embodiment, when the receiving a first message is receiving the first input, the first input may be that the first electronic device receives a handover request input by the user. For example, when the first electronic device is a mobile phone, the first input may be a first input performed by the user on a call terminal handover request control of the mobile phone and received by the electronic device. After receiving the first input, the mobile phone may send call hold signaling to the server to trigger the call handover process.

In an embodiment, when the receiving a first message is receiving the message that the power parameter of the first electronic device is lower than the first threshold, the first electronic device may automatically trigger handover of the first call from between the first electronic device and the second electronic device to between the first electronic device and the third electronic device. For example, when the first electronic device is a smartwatch, when power of the watch is lower than the first threshold by 10%, the smartwatch automatically sends call hold signaling to the server to trigger the call handover process.

Further, the first threshold may be preset or user-defined. This is not limited in this embodiment of this application.

In this way, in a case that the user needs to perform handover or that the first electronic device currently actually in the first call has insufficient power, seamless handover can be completed, thereby greatly improving smoothness of call handover for the user to use different terminals.

Optionally, in this embodiment of this application, before sending a call handover request to the server in the foregoing step 202, the call handover method provided in this embodiment of this application may include the following step B:
Step B: Set a communication status of a first communication port of the first electronic device to a first state.

For example, in the first state, the first electronic device only sends the call data of the first call through the first communication port.

For example, the call hold signaling is further used to indicate that the communication status of the first communication port is the first state, and in the first state, the first communication port of the first electronic device only sends the call data of the first call.

For example, the first state is the send-only (send only) state.

For example, the first communication port may be a network sending port of the first electronic device or a call data sending port of the first electronic device.

For example, a purpose of setting the communication status of the first communication port of the first electronic device to the first state is to set the first electronic device to the on-hold state during the first call first, to facilitate the subsequent handover of the first call from the first electronic device to the third electronic device.

**In** this way, in a case that the first call needs to be handed over between devices, seamless handover can be completed by controlling the first communication port of the first electronic device, thereby greatly improving smoothness of call handover for the user to use different terminals.

Optionally, in this embodiment of this application, after sending a call handover request to the server in the foregoing step 201, the call handover method provided in this embodiment of this application may include the following step C:
Step C: Receive the call hold feedback signaling from the server.

For example, the call hold feedback signaling is used to indicate that the second electronic device continues to hold the communication connection with the first electronic device and stops sending the call data to the second electronic device through the server.

It may be understood that the call hold feedback signaling is used to indicate that the second electronic device is ready to hand over the first call from the first electronic device to the third electronic device. In other words, the second electronic device has held the call, waiting for handover.

Optionally, in this embodiment of this application, the call hold feedback signaling is further used to indicate that the first electronic device sets a communication status of a first communication port of the first electronic device to a second state, where in the second state, the first communication port only receives the call data of the first call; and the call handover method provided in this embodiment of this application may include the following step D:
Step D: In a case that the call hold feedback signaling sent by the server is received, set the communication status of the first communication port of the first electronic device to the second state.

It should be noted that when the first electronic device sends the call hold signaling to the second electronic device through the server, the first electronic device sets its own communication port to the send-only state, but in a case that the call hold feedback signaling is received through the server, the communication port is set to the receive-only state, that is, after the handover process is ended, the first electronic device can only receive the call data without sending the call data subsequently.

In an embodiment, in a case that the first electronic device receives the call hold feedback signaling through the server, the first electronic device is in the on-hold state, and the communication connection between the first electronic device and the second electronic device proceeds through the server. Specifically, the first electronic device holds the communication connection with the second electronic device through the server by receiving an RTCP data packet sent by the server, to avoid hanging up.

In this way, the call hold feedback signaling makes the first electronic device in the on-hold state, so that seamless handover of the first call to the third electronic device is completed subsequently.

Optionally, in this embodiment of this application, the first electronic device and the third electronic device are in a connected state, and in the call process of the first call, the call handover method provided in this embodiment of this application may include the following step E:
Step E: Transmit call signaling of the first call to the third electronic device in real time.

For example, the call signaling of the first call is control signaling.

For example, the first electronic device transmits the call signaling of the first call to the third electronic device in real time, to keep the third electronic device always in the first call through the first electronic device.

It may be understood that the first electronic device continuously transmits the call signaling to the third electronic device in real time, so that the third electronic device is always ready to connect the first call at any time.

An embodiment further provides a call handover method. As shown in FIG. 2, the call handover method is applied to a server and includes the following step 301 to step 303.

Step 301: The server receives call hold signaling from a first electronic device in a process of a first call between the first electronic device and a second electronic device.

In this embodiment of this application, the call hold signaling is used to request to hold a communication connection between the first electronic device and the second electronic device.

In this embodiment of this application, the first electronic device has a communication connection with a third electronic device.

Optionally, in this embodiment of this application, the call hold signaling is further used to indicate that a communication status of a first communication port of the first electronic device is a first state.

In the first state, the first communication port of the first electronic device only sends call data of the first call.

For the first electronic device, the second electronic device, the third electronic device, the call hold signaling, the communication connection between the first electronic device and the third electronic device, and the first state in this embodiment of this application, refer to the foregoing descriptions. Details are not described herein again.

It may be understood that in this embodiment of this application, the server, as a relay communication device, is mainly configured to coordinate and assist the first electronic device, the second electronic device, and the third electronic device to transmit signaling. Further, call data between the first electronic device and the second electronic device and call data between the first electronic device and the third electronic device are also transmitted by the server as a relay station.

Step 302: The server sends call handover signaling to the third electronic device in a case that the communication connection is held between the first electronic device and the second electronic device.

In this embodiment of this application, the call handover signaling is used to request to hand over the first call to the third electronic device.

It should be noted that, the call handover signaling is sent to the third electronic device only in a case that the communication connection is held between the first electronic device and the second electronic device. In other words, the server sends the call handover signaling to the third electronic device only in a case that the call data has not been transmitted between the first electronic device and the second electronic device.

Optionally, in this embodiment of this application, the call handover signaling is used to indicate that the third electronic device sets a communication status of a third communication port of the third electronic device to a third state.

For example, in the third state, the third communication port of the third electronic device receives and sends call data of the first call.

It may be understood that before the third electronic device receives the call handover signaling, the third electronic device is only an electronic device having a communication connection with the first electronic device, and does not receive and transmit call data. The third electronic device sets, only after receiving the call handover signaling, the communication status of the third communication port of the third electronic device to a state in which the call data of the first call can be received and sent.

Step 303: The server receives call handover feedback signaling from the third electronic device.

In this embodiment of this application, the call handover feedback signaling is used to indicate that the first call has been handed over to the third electronic device.

In this embodiment of this application, after the third electronic device receives the call handover signaling and agrees to the handover of the first call, the server may receive the call handover feedback signaling fed back by the third electronic device.

In this embodiment of this application, in the process of the first call between the first electronic device and the second electronic device, the server receives the call hold signaling from the first electronic device; in the case that the communication connection is held between the first electronic device and the second electronic device, the server sends the call handover signaling to the third electronic device; and the server receives the call handover feedback signaling from the third electronic device. In this way, the server completes the handover of the first call from the first electronic device to the third electronic device by coordinating and assisting different electronic devices to transmit call signaling to each other, thereby implementing the seamless handover of the first call between the two terminals in a real sense while ensuring integrity of the call data.

Optionally, in this embodiment of this application, after the foregoing step 301, the call handover method provided in this embodiment of this application may include the following step F1 to step F3.

Step F1: The server sends the call hold signaling to the second electronic device.

Step F2: The server receives call hold feedback signaling fed back by the second electronic device.

Step F3: The server sends the call hold feedback signaling to the first electronic device.

For example, the call hold feedback signaling is used to indicate holding the communication connection between the first electronic device and the second electronic device.

Optionally, in this embodiment of this application, the call hold feedback signaling is further used to indicate that the first electronic device sets a communication status of a first communication port of the first electronic device to a second state.

For example, in the second state, the first communication port of the first electronic device only receives call data of the first call.

For example, for the call hold signaling, the call hold feedback signaling, and the second state, refer to the foregoing descriptions. Details are not discussed herein again.

Optionally, in this embodiment of this application, after step 303, the call handover method provided in this embodiment of this application may include the following step G1 and step G2.

Step G1: The server sends the call handover feedback signaling to the second electronic device.

Step G2: The server receives processing feedback signaling from the second electronic device.

For example, the processing feedback signaling is used to indicate that call data of the first call is transmitted between the second electronic device and the third electronic device.

For example, the processing feedback signaling is used to notify the server that the entire handover process of handing over the first call from the first electronic device to the third electronic device is completed.

Optionally, in this embodiment of this application, the call handover feedback signaling is used to indicate that the second electronic device sets a communication status of a fourth communication port of the second electronic device to a third state.

For example, in the third state, the fourth communication port of the second electronic device receives and sends call data of the first call.

For example, as can be learned from the foregoing content, before receiving the call handover feedback signaling, the second electronic device receives the call hold signaling sent by the first electronic device through the server. Therefore, the second electronic device completes the holding process by setting a network port of the second electronic device to a receive-only state. After receiving the call handover feedback signaling sent by the server, the second electronic device can feed back, to the server, the processing feedback signaling corresponding to the call handover feedback signaling to indicate that the second electronic device agrees to establish a call connection with the third electronic device to transmit the call data. Up to now, the handover process is completed.

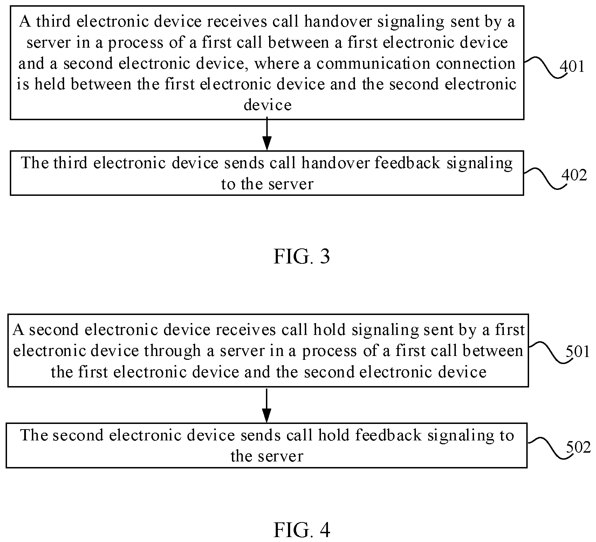

An embodiment provides a data transmission method. As shown in FIG. 3, the call handover method is applied to a third electronic device and includes the following step 401 and step 402.

Step 401: The third electronic device receives call handover signaling sent by a server in a process of a first call between a first electronic device and a second electronic device, where a communication connection is held between the first electronic device and the second electronic device.

Step 402: The third electronic device sends call handover feedback signaling to the server.

In this embodiment of this application, the third electronic device has a communication connection with the first electronic device.

In this embodiment of this application, the call handover signaling is used to request to hand over the first call to the third electronic device, and the call handover feedback signaling is used to indicate that the first call has been handed over to the third electronic device.

Optionally, in this embodiment of this application, the call handover signaling is used to indicate that the third electronic device sets a communication status of a third communication port to a third state.

For example, in the third state, the third electronic device receives and sends call data of the first call through the third communication port.

For the first electronic device, the second electronic device, the third electronic device, the first call, and the call handover feedback signaling in this embodiment of this application, refer to the foregoing descriptions. Details are not described herein again.

In this embodiment of this application, the third electronic device receives the call handover signaling sent by the server in the process of the first call between the first electronic device and the second electronic device, where the communication connection is held between the first electronic device and the second electronic device, and then the third electronic device sends the call handover feedback signaling. In this way, the third electronic device receives call signaling sent by the server and responds, to hand over the first call from the first electronic device to the third electronic device, thereby implementing the seamless handover of the first call between the two terminals in a real sense while ensuring integrity of the call data.

Optionally, in this embodiment of this application, the first electronic device and the third electronic device are in a connected state, and in the call process of the first call, the call handover method provided in this embodiment of this application may include the following step H.

Step H: The third electronic device transceives call signaling of the first call with the first electronic device in real time.

For example, for the description of step H, refer to the foregoing step E. Details are not described herein again.

An embodiment provides a data transmission method. As shown in FIG. 4, the call handover method is applied to a second electronic device and includes the following step 501 and step 502.

Step 501: The second electronic device receives call hold signaling sent by a first electronic device through a server in a process of a first call between the first electronic device and the second electronic device.

In this embodiment of this application, the call hold signaling is used to request to hold a communication connection between the first electronic device and the second electronic device, and the first electronic device has a communication connection with a third electronic device.

Step 502: The second electronic device sends call hold feedback signaling to the server.

In this embodiment of this application, the call hold feedback signaling is used to indicate holding the communication connection between the first electronic device and the second electronic device.

Optionally, in this embodiment of this application, the call handover feedback signaling is used to indicate that the second electronic device sets a communication status of a fourth communication port of the second electronic device to a third state.

For example, in the third state, the fourth communication port receives and sends call data of the first call.

For the first electronic device, the second electronic device, the third electronic device, the call hold signaling, the call hold feedback signaling, and the third state in this embodiment of this application, refer to the foregoing descriptions. Details are not described herein again.

In this embodiment of this application, in the process of the first call between the first electronic device and the second electronic device, in a case that the first electronic device needs to hand over the first call from the first electronic device to the third electronic device, the second electronic device receives the call hold signaling sent by the first electronic device through the server, and the second electronic device sends the call hold feedback signaling to the server. In this way, before the handover is completed, the second electronic device is in an on-hold state and suspends transmission of the call data, to facilitate the subsequent seamless handover of the first call from the first electronic device to the third electronic device, thereby implementing the seamless handover of the first call between the two terminals in a real sense while ensuring integrity of the call data.

Optionally, in this embodiment of this application, after the foregoing step 502, the call handover method provided in this embodiment of this application may include the following step I1 and step I2.

Step I1: The second electronic device receives call handover feedback signaling from the server.

Step I2: The second electronic device sends processing feedback signaling to the server.

For example, the processing feedback signaling is used to indicate that call data of the first call is transmitted between the second electronic device and the third electronic device.

For example, for the call handover feedback signaling and the processing feedback signaling, refer to the foregoing descriptions. Details are not described herein again.

The call handover method is hereinafter comprehensively demonstrated by using two examples with reference to the foregoing embodiment.

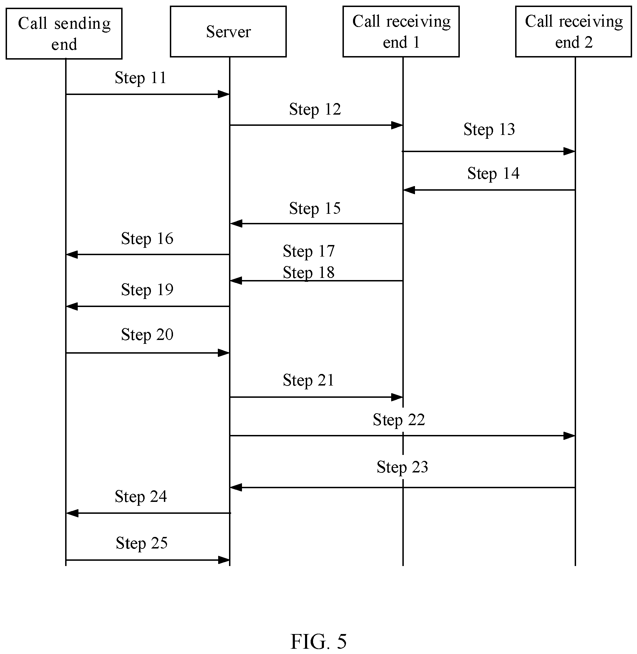

Example 1: Assuming that a first electronic device is a call receiving end 1, and a second electronic device is a call sending end, and a third electronic device is a call receiving end 2, and there is a Bluetooth connection between the call receiving end 1 and the call receiving end 2, and call signaling may be transmitted between the call receiving end 1 and the call receiving end 2 in real time, as shown in FIG. 5, the method includes the following steps.

Step 11: The call sending end sends call signaling to a server.

Step 12: The server receives the call signaling and forwards the call signaling to the call receiving end 1.

Step 13: The call receiving end 1 forwards the call signaling to the call receiving end 2 for processing.

Step 14: The call receiving end 2 returns call signaling feedback information to a terminal at the call receiving end 1 for processing.

Step 15: The call receiving end 1 forwards the call signaling feedback information to the server.

Step 16: The server forwards the call signaling feedback information to the call sending end for processing.

Step 17: The receiving end 1 receives a first message for indicating handover of a first call to the receiving end 2 (same as step 201).

Step 18: In a process of the first call between the call receiving end 1 and the call sending end, if it is necessary to hand over the first call from the call receiving end 1 to the call receiving end 2, the call receiving end 1 sends call hold signaling to the server (same as step 202).

Step 19: The server sends the call hold signaling to the call sending end (same as step F1).

Step 20: The terminal sending end sends call hold feedback signaling to the server (same as step 502).

Step 21: The server sends the call hold feedback signaling to the call receiving end 1 (same as step F3).

Step 22: The server sends call handover signaling to the call receiving end 2 in a case that a communication connection is held between the call receiving end 1 and the call sending end (same as step 302).

Step 23: The call receiving end 2 sends call handover feedback signaling to the server (same as step 402).

Step 24: The server sends the call handover feedback signaling to the call sending end (same as step G1).

Step 25: The call sending end sends call hold feedback signaling to the server (same as step 502).

The foregoing steps 11 to 16 are a normal call establishment process, and steps 17 to 25 are used to demonstrate a call handover process in an embodiment of this application.

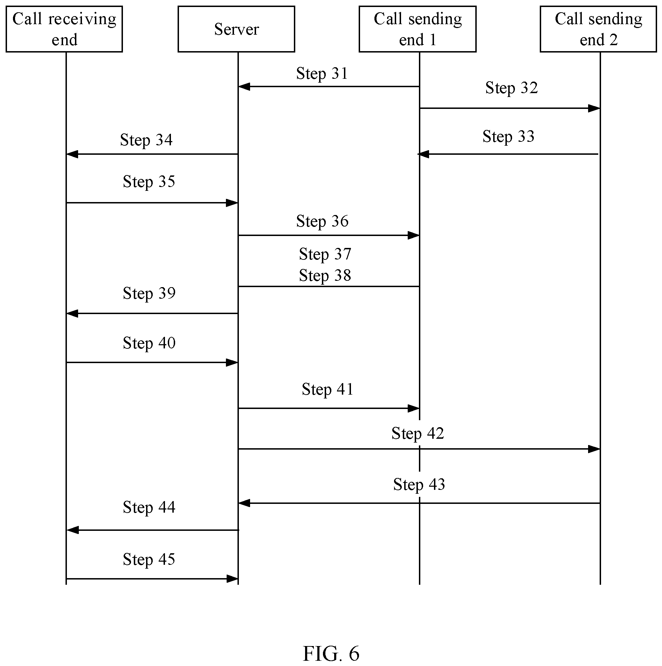

Example 2: Assuming that a first electronic device is a call sending end 1, and a second electronic device is a call receiving end, and a third electronic device is a call sending end 2, and there is a Wi-Fi connection between the call sending end 1 and the call sending end 2, and call signaling may be transmitted between the call sending end 1 and the call sending end 2 in real time, as shown in FIG. 6, the method includes the following steps.

Step 31: The call sending end 1 sends call signaling to a server.

Step 32: The call sending end 1 forwards the call signaling to the call sending end 2 for processing.

Step 33: The call sending end 2 returns call signaling feedback information to the call sending end 1 for processing.

Step 34: After receiving the call signaling, the server performs corresponding processing and forwards the call signaling to the call receiving end.

Step 35: The call receiving end forwards call signaling feedback information to the server.

Step 36: The server forwards the call signaling feedback information to the call sending end 1 for processing.

Step 37: The sending end 1 receives a first message for indicating handover of a first call to the sending end 2 (same as step 201).

Step 38: In a process of the first call between the call sending end 1 and the call receiving end, if it is necessary to hand over the first call from the call sending end 1 to the call sending end 2, the call sending end 1 sends call hold signaling to the server (same as step 202).

Step 39: The server sends the call hold signaling to the call receiving end (same as step F1).

Step 40: The call receiving end sends call hold feedback signaling to the server (same as step 502).

Step 41: The server sends the call hold feedback signaling to the call sending end 1 (same as step F3).

Step 42: The server sends call handover signaling to the call sending end 2 in a case that a communication connection is held between the call sending end 1 and the call receiving end (same as step 302).

Step 43: The call sending end 2 sends call handover feedback signaling to the server (same as step 402).

Step 44: The server sends the call handover feedback signaling to the call receiving end (same as step G1).

Step 45: The call receiving end sends call hold feedback signaling to the server (same as step 502).

The foregoing steps 31 to 36 are a normal call establishment process, and steps 37 to 45 are used to demonstrate a call handover process in an embodiment of this application.

The call handover method provided in this embodiment of this application may be performed by a call handover apparatus. A call handover apparatus provided in an embodiment of this application is described by assuming that the call handover method in this embodiment of this application is performed by the call handover apparatus.

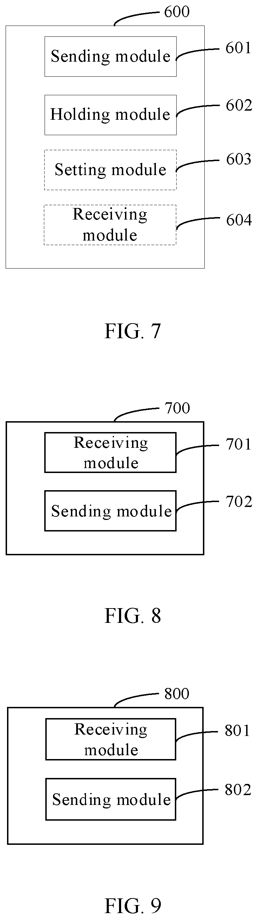

FIG. 7 is a first possible schematic diagram of a structure of a call handover apparatus according to an embodiment of this application. As shown in FIG. 7, the data transmission apparatus 600 includes: a sending module 601, configured to receive a first message in a process of a first call between a first electronic device and a second electronic device, where the first message is used to indicate handover of the first call to a third electronic device, and the third electronic device has a communication connection with the first electronic device, where the sending module 601 is further configured to send call hold signaling to a server; and a holding module 602, configured to: after call hold feedback signaling is received from the server, hold a communication connection with the second electronic device through the server, and stop sending call data of the first call to the server, where the call hold signaling is used to request to hold the communication connection between the first electronic device and the second electronic device; and the call hold feedback signaling is used to indicate holding the communication connection between the first electronic device and the second electronic device.

According to the call handover apparatus provided in this embodiment of this application, in the process of the first call between the call handover apparatus and the second electronic device, after receiving the first message used to indicate handover of the first call to the third electronic device, the first electronic device sends the call hold signaling to the server, where the third electronic device has a communication connection with the call handover apparatus; and after receiving the call hold feedback signaling sent by the server, the first electronic device holds the communication connection with the second electronic device through the server, and stops sending the call data of the first call to the second electronic device through the server. In this way, by using the call hold signaling to trigger holding of the first call, that is, to suspend transmission of the call data before the handover, the call handover apparatus can complete the call handover only by triggering the call hold signaling without hanging up the call. Further, the call data is not lost, and the seamless handover of the first call between the two terminals in a real sense is implemented while integrity of the call data is ensured.

Optionally, in this embodiment of this application, the receiving a first message includes either of the following: receiving a first input and receiving a message that a power parameter of the first electronic device is lower than a first threshold, where the first input is used to hand over the first call from the first electronic device to the third electronic device.

Optionally, in this embodiment of this application, the apparatus 600 further includes a setting module 603, configured to set a communication status of a first communication port of the first electronic device to a first state, where in the first state, the first electronic device only sends the call data of the first call through the first communication port, where the call hold signaling is further used to indicate that the communication status of the first communication port is the first state, and in the first state, the first communication port only sends the call data of the first call.

Optionally, in this embodiment of this application, the apparatus 600 further includes a receiving module 604, configured to receive the call hold feedback signaling from the server, where the call hold feedback signaling is used to indicate that the second electronic device continues to hold the communication connection with the first electronic device and stops sending the call data to the second electronic device through the server.

Optionally, in this embodiment of this application, the call hold feedback signaling is further used to indicate that the first electronic device sets a communication status of a first communication port of the first electronic device to a second state, where in the second state, the first communication port only receives the call data of the first call; and in a case that the call hold feedback signaling sent by the server is received, a setting module 603 sets the communication status of the first communication port of the first electronic device to the second state.

Optionally, in this embodiment of this application, the first electronic device and the third electronic device are in a connected state, and in the call process of the first call, the sending module 601 is further configured to transmit call signaling of the first call to the third electronic device in real time.

FIG. 8 is a second possible schematic diagram of a structure of a call handover apparatus according to an embodiment of this application. As shown in FIG. 8, the call handover apparatus 700 includes: a receiving module 701, configured to receive call hold signaling from a first electronic device in a process of a first call between the first electronic device and a second electronic device, where the first electronic device has a communication connection with a third electronic device; and a sending module 702, configured to send call handover signaling to the third electronic device in a case that a communication connection is held between the first electronic device and the second electronic device, where the receiving module 701 is further configured to receive call handover feedback signaling fed back by the third electronic device, where the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

According to the call handover apparatus provided in this embodiment of this application, in the process of the first call between the first electronic device and the second electronic device, the call handover apparatus receives the call hold signaling from the first electronic device; in the case that the communication connection is held between the first electronic device and the second electronic device, the call handover apparatus sends the call handover signaling to the third electronic device; and the call handover apparatus receives the call handover feedback signaling from the third electronic device. In this way, the server completes the handover of the first call from the first electronic device to the third electronic device by coordinating and assisting different electronic devices to transmit call signaling to each other, thereby implementing the seamless handover of the first call between the two terminals in a real sense while ensuring integrity of the call data.

Optionally, in this embodiment of this application, the sending module 702 is further configured to send the call hold signaling to the second electronic device; the receiving module 701 is further configured to receive call hold feedback signaling fed back by the second electronic device; and the sending module 702 is further configured to send the call hold feedback signaling to the first electronic device, where the call hold feedback signaling is used to indicate holding the communication connection between the first electronic device and the second electronic device.

Optionally, in this embodiment of this application, the sending module 702 is further configured to send the call handover feedback signaling to the second electronic device; and the receiving module 701 is further configured to receive processing feedback signaling from the second electronic device, where the processing feedback signaling is used to indicate that call data of the first call is transmitted between the second electronic device and the third electronic device.

Optionally, in this embodiment of this application, the call hold signaling is further used to indicate that a communication status of a first communication port of the first electronic device is a first state, where in the first state, the first communication port of the first electronic device only sends call data of the first call.

Optionally, in this embodiment of this application, the call hold feedback signaling is further used to indicate that the first electronic device sets a communication status of a first communication port of the first electronic device to a second state, where in the second state, the first communication port of the first electronic device only receives call data of the first call.

Optionally, in this embodiment of this application, the call handover signaling is used to indicate that the third electronic device sets a communication status of a third communication port of the third electronic device to a third state, where in the third state, the third communication port of the third electronic device receives and sends call data of the first call.

Optionally, in this embodiment of this application, the call handover feedback signaling is used to indicate that the second electronic device sets a communication status of a fourth communication port of the second electronic device to a third state, where in the third state, the fourth communication port of the second electronic device receives and sends call data of the first call.

FIG. 9 is a third possible schematic diagram of a structure of a call handover apparatus according to an embodiment of this application. As shown in FIG. 9, the call handover apparatus 800 includes: a receiving module 801, configured to receive call handover signaling sent by a server in a process of a first call between a first electronic device and a second electronic device in a case that the first electronic device needs to hand over the first call from the first electronic device to a third electronic device, where a communication connection is held between the first electronic device and the second electronic device; and a sending module 802, configured to send call handover feedback signaling to the server, where the call handover signaling is used to request to hand over the first call to the third electronic device, and the call handover feedback signaling is used to indicate that the first call has been handed over to the third electronic device.

In this embodiment of this application, in the process of the first call between the first electronic device and the call handover apparatus, in the case that the first electronic device needs to hand over the first call from the first electronic device to the third electronic device, the call handover apparatus receives the call hold signaling sent by the first electronic device through the server, and the call handover apparatus sends the call hold feedback signaling to the server. In this way, before the handover is completed, the call handover apparatus is in an on-hold state and suspends transmission of the call data, to facilitate the subsequent seamless handover of the first call from the first electronic device to the third electronic device, thereby implementing the seamless handover of the first call between the two terminals in a real sense while ensuring integrity of the call data.

Optionally, in this embodiment of this application, the call handover signaling is used to indicate that the third electronic device sets a communication status of a third communication port to a third state, where in the third state, the third electronic device receives and sends call data of the first call through the third communication port.

Optionally, in this embodiment of this application, the first electronic device and the third electronic device are in a connected state, and in the call process of the first call, the apparatus 800 further includes a transceiver module, configured to transceive call signaling of the first call with the first electronic device in real time.

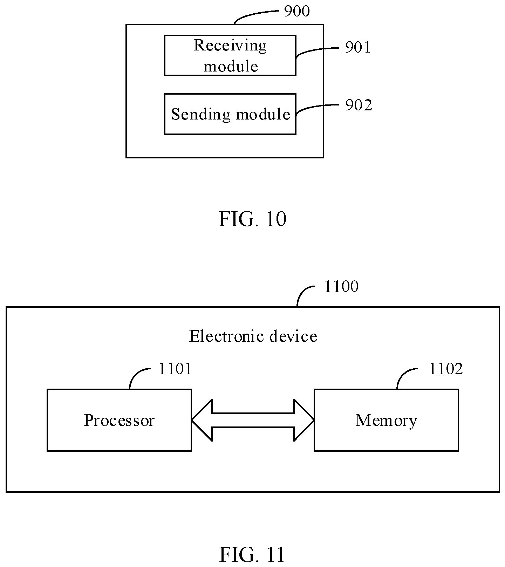

FIG. 10 is a first possible schematic diagram of a structure of a call handover apparatus according to an embodiment of this application. As shown in FIG. 10, the call handover apparatus 900 includes: a receiving module 901, configured to receive call hold signaling sent by a first electronic device through a server in a process of a first call between the first electronic device and a second electronic device, where the call hold signaling is used to request to hold a communication connection between the first electronic device and the second electronic device, and the first electronic device has a communication connection with a third electronic device; and a sending module 902, configured to send call hold feedback signaling to the server, where the call hold feedback signaling is used to indicate holding the communication connection between the first electronic device and the second electronic device.

According to the call handover apparatus provided in this embodiment of this application, in the process of the first call between the first electronic device and the call handover apparatus, the call handover apparatus receives the call hold signaling sent by the first electronic device through the server, and the call handover apparatus sends the call hold feedback signaling to the server. In this way, before the handover is completed, the call handover apparatus is in an on-hold state and suspends transmission of the call data, to facilitate the subsequent seamless handover of the first call from the first electronic device to the third electronic device, thereby implementing the seamless handover of the first call between the two terminals in a real sense while ensuring integrity of the call data.

Optionally, in this embodiment of this application, the receiving module 901 is further configured to receive call handover feedback signaling from the server; and the sending module 902 is further configured to send processing feedback signaling to the server, where the processing feedback signaling is used to indicate that call data of the first call is transmitted between the second electronic device and the third electronic device.

Optionally, in this embodiment of this application, the call handover feedback signaling is used to indicate that the second electronic device sets a communication status of a fourth communication port to a third state, where in the third state, the fourth communication port receives and sends call data of the first call.

It should be noted that, as shown in FIG. 7, solid-line boxes are used to indicate modules that must be included in the call handover apparatus 600, such as the sending module 601; and dashed-line boxes are used to indicate modules that may or may not be included in the call handover apparatus 600, such as the receiving module 604.

The call handover apparatus in this embodiment of this application may be an electronic device, or may be a component such as an integrated circuit or a chip in an electronic device. The electronic device may be a terminal, or may be other devices than a terminal. For example, the electronic device may be a mobile phone, a tablet computer, a notebook computer, a palmtop computer, an in-vehicle electronic device, a mobile Internet device (Mobile Internet Device, MID), an augmented reality (Augmented Reality, AR) or virtual reality (Virtual Reality, VR) device, a robot, a wearable device, an ultra-mobile personal computer (Ultra-Mobile Personal Computer, UMPC), a netbook, a personal digital assistant (Personal Digital Assistant, PDA), or the like; or the electronic device may be a server, a network attached storage (Network Attached Storage, NAS), a personal computer (Personal Computer, PC), a television (Television, TV), a teller machine, a self-service machine, or the like. This is not specifically limited in this embodiment of this application.

The call handover apparatus in this embodiment of this application may be an apparatus having an operating system. The operating system may be an Android (Android) operating system, an iOS operating system, or other possible operating systems, and is not specifically limited in this embodiment of this application.

The call handover apparatus provided in this embodiment of this application is capable of implementing the processes implemented in the method embodiments in FIG. 1 to FIG. 6. To avoid repetition, details are not described herein again.

Optionally, as shown in FIG. 11, an embodiment of this application further provides an electronic device 1100, including a processor 1101 and a memory 1102. A program or instructions are stored in the memory 1102 and executable on the processor 1101. When the program or instructions are executed by the processor 1101, each step of the foregoing embodiment of the call handover method is implemented, with the same technical effect achieved. To avoid repetition, details are not described herein again.

It should be noted that electronic devices in this embodiment of this application include the foregoing mobile electronic device and nonmobile electronic device.

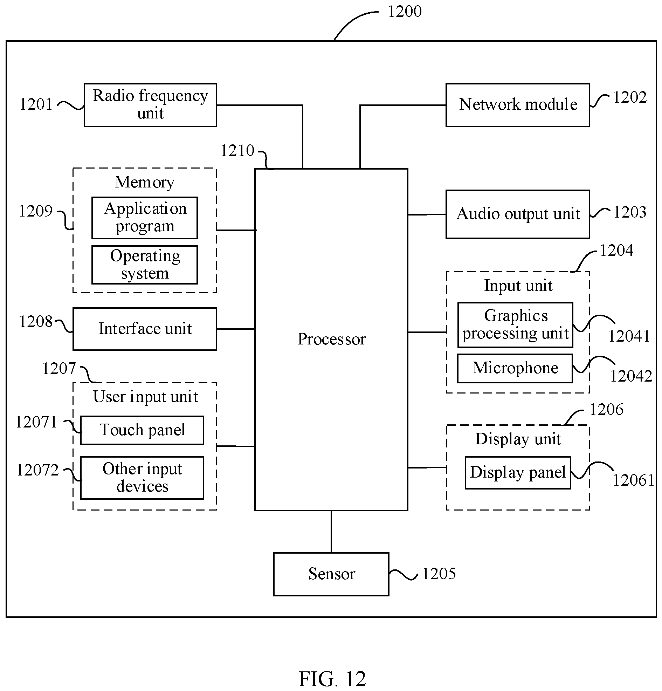

FIG. 12 is a schematic diagram of a hardware structure of an electronic device for implementing an embodiment of this application.

The electronic device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the electronic device 1200 may further include a power supply (such as a battery) for supplying power to the components. The power supply may be logically connected to the processor 1210 through a power management system. In this way, functions such as charge management, discharge management, and power consumption management are implemented by using the power management system. The structure of the electronic device shown in FIG. 12 does not constitute a limitation on the electronic device. The electronic device may include more or fewer components than those shown in the figure, or some components are combined, or component arrangements are different. Details are not described herein again.

This embodiment of this application includes three electronic devices in total.

For a first electronic device, the radio frequency unit 1201 is configured to receive a first message in a process of a first call between the first electronic device and a second electronic device, where the first message is used to indicate handover of the first call to a third electronic device, and the third electronic device has a communication connection with the first electronic device; the radio frequency unit 1201 is further configured to send call hold signaling to a server; and the radio frequency unit 1201 is further configured to: after receiving call hold feedback signaling from the server, hold a communication connection with the second electronic device through the server, and stop sending call data of the first call to the server, where the call hold signaling is used to request to hold the communication connection between the first electronic device and the second electronic device; and the call hold feedback signaling is used to indicate holding the communication connection between the first electronic device and the second electronic device.

In the first electronic device provided in this embodiment of this application, in the process of the first call between the first electronic device and the second electronic device, the server receives the call hold signaling from the first electronic device; in the case that the communication connection is held between the first electronic device and the second electronic device, the server sends the call handover signaling to the third electronic device; and the server receives the call handover feedback signaling from the third electronic device. In this way, the server completes the handover of the first call from the first electronic device to the third electronic device by coordinating and assisting different electronic devices to transmit call signaling to each other, thereby implementing the seamless handover of the first call between the two terminals in a real sense while ensuring integrity of the call data. In an example, in a case that a first condition is met, the call hold signaling is sent to the server, where the first condition includes at least one of the following: a first input is received, and a power parameter of the first electronic device is lower than a first threshold, where the first input is used to hand over the first call from the first electronic device to the third electronic device.

In an example, the processor 1210 is configured to set a communication status of a first communication port of the first electronic device to a first state, where in the first state, the first communication port only sends the call data of the first call, where the call hold signaling is further used to indicate that the communication status of the first communication port of the first electronic device is the first state, and in the first state, the first communication port only sends the call data of the first call.

In an example, the radio frequency unit 1201 is configured to receive the call hold feedback signaling from the server, where the call hold feedback signaling is used to indicate that the second electronic device continues to hold the communication connection with the first electronic device and stops sending the call data to the second electronic device through the server.

In an example, the call hold feedback signaling is further used to indicate that the first electronic device sets a communication status of a first communication port of the first electronic device to a second state, where in the second state, the first communication port only receives the call data of the first call; and in a case that the call hold feedback signaling sent by the server is received, the processor 1210 is configured to set the communication status of the first communication port of the first electronic device to the second state.

In an example, the first electronic device and the third electronic device are in a connected state, and in the call process of the first call, the radio frequency unit 1201 is further configured to transmit call signaling of the first call to the third electronic device in real time.

For a third electronic device, the radio frequency unit 1201 is configured to receive call handover signaling sent by a server in a process of a first call between a first electronic device and a second electronic device in a case that the first electronic device needs to hand over the first call from the first electronic device to the third electronic device, where a communication connection is held between the first electronic device and the second electronic device, and the third electronic device has a communication connection with the first electronic device; and the radio frequency unit 1201 is further configured to send call handover feedback signaling to the server, where the call handover signaling is used to request to hand over the first call to the third electronic device, and the call handover feedback signaling is used to indicate that the first call has been handed over to the third electronic device.

In this embodiment of this application, the third electronic device receives the call handover signaling sent by the server in the process of the first call between the first electronic device and the second electronic device, where the communication connection is held between the first electronic device and the second electronic device, and then the third electronic device sends the call handover feedback signaling. In this way, the third electronic device receives call signaling sent by the server and responds, to hand over the first call from the first electronic device to the third electronic device, thereby implementing the seamless handover of the first call between the two terminals in a real sense while ensuring integrity of the call data.

In an example, the first electronic device and the third electronic device are in a connected state, and in the call process of the first call, the radio frequency unit 1201 is further configured to transmit call signaling of the first call to the first electronic device in real time.

For a second electronic device, the radio frequency unit 1201 is configured to receive call hold signaling sent by a first electronic device through a server in a process of a first call between the first electronic device and the second electronic device, where the call hold signaling is used to request to hold a communication connection between the first electronic device and the second electronic device, and the first electronic device has a communication connection with a third electronic device; and the radio frequency unit 1201 is further configured to send call hold feedback signaling to the server, where the call hold feedback signaling is used to indicate holding the communication connection between the first electronic device and the second electronic device.

In this embodiment of this application, in the process of the first call between the first electronic device and the second electronic device, in a case that the first electronic device needs to hand over the first call from the first electronic device to the third electronic device, the second electronic device receives the call hold signaling sent by the first electronic device through the server, and the second electronic device sends the call hold feedback signaling to the server. In this way, before the handover is completed, the second electronic device is in an on-hold state and suspends transmission of the call data, to facilitate the subsequent seamless handover of the first call from the first electronic device to the third electronic device, thereby implementing the seamless handover of the first call between the two terminals in a real sense while ensuring integrity of the call data.

In an example, the radio frequency unit 1201 is further configured to receive call handover feedback signaling from the server; and the radio frequency unit 1201 is further configured to send processing feedback signaling to the server, where the processing feedback signaling is used to indicate that call data of the first call is transmitted between the second electronic device and the third electronic device.

It should be understood that, in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, or the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function button (such as a volume control button or a power button), a trackball, a mouse, and a joystick. Details are not described herein again.

The memory 1209 may be configured to store software programs and various data. The memory 1209 may primarily include a first storage area for storing programs or instructions and a second storage area for storing data. The first storage area may store an operating system, an application program or instructions required by at least one function (such as an audio play function and an image play function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1209 in this embodiment of this application includes but is not limited to these and any other suitable types of memories.

The processor 1210 may include one or more processing units. Optionally, the processor 1210 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1210.

An embodiment of this application further provides a network-side device, including a processor and a communication interface. The communication interface is configured to receive call hold signaling sent by a first electronic device in a process of a first call between the first electronic device and a second electronic device in a case that the first electronic device needs to hand over the first call from the first electronic device to a third electronic device, where the first electronic device has a communication connection with the third electronic device; the communication interface is further configured to send call handover signaling to the third electronic device in a case that a communication connection is held between the first electronic device and the second electronic device; and the communication interface is further configured to receive call handover feedback signaling fed back by the third electronic device, where the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

The network-side device embodiment corresponds to the foregoing method embodiment of the network-side device, and each implementation process and implementation of the foregoing method embodiment can be applied to the network-side device embodiment, with the same technical effect achieved.

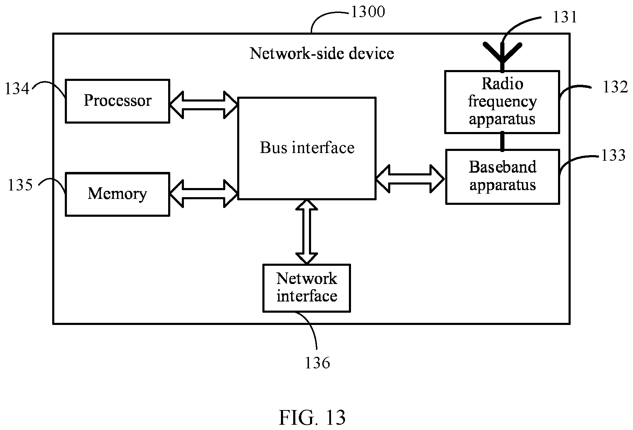

Specifically, an embodiment of this application further provides a network-side device. As shown in FIG. 13, the network-side device 1300 includes an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes to-be-sent information, and sends the information to the radio frequency apparatus 132; and the radio frequency apparatus 132 processes the received information and then sends the information out by using the antenna 131.

The method performed by the network-side device in the foregoing embodiment may be implemented in the baseband apparatus 133. The baseband apparatus 133 includes a baseband processor.

The baseband apparatus 133 may include, for example, at least one baseband unit, where a plurality of chips are disposed on the baseband unit. As shown in FIG. 13, one of the chips is, for example, the baseband processor, connected to the memory 135 by using a bus interface, to invoke a program in the memory 135 to perform the operation of the network device shown in the foregoing method embodiment.

The network-side device may further include a network interface 136, where the interface is, for example, a common public radio interface (Common Public Radio Interface, CPRI).

Specifically, the network-side device 1300 in this embodiment of the present invention further includes a program or instructions stored in the memory 135 and executable on the processor 134. When the processor 134 invokes the program or instructions in the memory 135, the method performed by each module shown in FIG. 12 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the call handover method is implemented, with the same technical effect achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the call handover method, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application provides a computer program product. The program product is stored in a storage medium, and the program product is executed by at least one processor to implement each process of the foregoing embodiment of the call handover method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In absence of more constraints, an element preceded by "includes a ..." does not preclude existence of other identical elements in the process, method, article, or apparatus that includes the element. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A call handover method, applied to a first electronic device and comprising:
receiving a first message in a process of a first call between the first electronic device and a second electronic device, wherein the first message is used to indicate handover of the first call to a third electronic device, and the third electronic device has a communication connection with the first electronic device;
sending call hold signaling to a server; and
after receiving call hold feedback signaling from the server, holding a communication connection with the second electronic device through the server, and stopping sending call data of the first call to the server; wherein
the call hold signaling is used to request to hold the communication connection between the first electronic device and the second electronic device; and
the call hold feedback signaling is used to indicate holding the communication connection between the first electronic device and the second electronic device.

2. The method according to claim 1, wherein
the receiving a first message comprises either of the following: receiving a first input and receiving a message that a power parameter of the first electronic device is lower than a first threshold, wherein the first input is used to indicate the first message to the first electronic device.

3. The method according to claim 1, wherein before sending a call handover request to the server, the method further comprises:
setting a communication status of a first communication port of the first electronic device to a first state, wherein in the first state, the first electronic device only sends the call data of the first call through the first communication port, wherein
the call hold signaling is further used to indicate that the communication status of the first communication port is the first state, and in the first state, the first communication port only sends the call data of the first call.

4. The method according to claim 1, wherein after sending a call handover request to the server, the method further comprises:
receiving the call hold feedback signaling from the server, wherein
the call hold feedback signaling is used to indicate that the second electronic device continues to hold the communication connection with the first electronic device and stops sending the call data to the second electronic device through the server.

5. The method according to claim 4, wherein the call hold feedback signaling is further used to indicate that the first electronic device sets a communication status of a first communication port of the first electronic device to a second state, wherein in the second state, the first communication port only receives the call data of the first call; and
in a case that the call hold feedback signaling sent by the server is received, the method further comprises:
setting the communication status of the first communication port of the first electronic device to the second state.

6. The method according to claim 1, wherein the first electronic device and the third electronic device are in a connected state, and in the call process of the first call, the method further comprises:
transmitting call signaling of the first call to the third electronic device in real time.

7. A call handover method, applied to a server and comprising:
receiving call hold signaling from a first electronic device in a process of a first call between the first electronic device and a second electronic device, wherein the first electronic device has a communication connection with a third electronic device;
sending call handover signaling to the third electronic device in a case that a communication connection is held between the first electronic device and the second electronic device; and
receiving call handover feedback signaling from the third electronic device; wherein
the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

8. The method according to claim 7, wherein after the receiving call hold signaling sent by a first electronic device, the method further comprises:
sending the call hold signaling to the second electronic device;
receiving call hold feedback signaling fed back by the second electronic device; and
sending the call hold feedback signaling to the first electronic device; wherein
the call hold feedback signaling is used to indicate holding the communication connection between the first electronic device and the second electronic device.

9. The method according to claim 7, wherein after the receiving call handover feedback signaling fed back by the third electronic device, the method further comprises:
sending the call handover feedback signaling to the second electronic device; and
receiving processing feedback signaling from the second electronic device, wherein the processing feedback signaling is used to indicate that call data of the first call is transmitted between the second electronic device and the third electronic device.

10. The method according to claim 7, wherein the call hold signaling is further used to indicate that a communication status of a first communication port of the first electronic device is a first state, wherein
in the first state, the first communication port of the first electronic device only sends call data of the first call.

11. The method according to claim 7, wherein the call hold feedback signaling is further used to indicate that the first electronic device sets a communication status of a first communication port of the first electronic device to a second state, wherein
in the second state, the first communication port of the first electronic device only receives call data of the first call.

12. The method according to claim 7, wherein the call handover signaling is used to indicate that the third electronic device sets a communication status of a third communication port of the third electronic device to a third state, wherein
in the third state, the third communication port of the third electronic device receives and sends call data of the first call.

13. The method according to claim 8, wherein the call handover feedback signaling is used to indicate that the second electronic device sets a communication status of a fourth communication port of the second electronic device to a third state, wherein
in the third state, the fourth communication port of the second electronic device receives and sends call data of the first call.

14. A call handover method, applied to a third electronic device and comprising:
receiving call handover signaling sent by a server in a process of a first call between a first electronic device and a second electronic device, wherein a communication connection is held between the first electronic device and the second electronic device, and the third electronic device has a communication connection with the first electronic device; and
sending call handover feedback signaling to the server; wherein
the call handover signaling is used to request to hand over the first call to the third electronic device, and the call handover feedback signaling is used to indicate that the first call has been handed over to the third electronic device.

15. The method according to claim 14, wherein the call handover signaling is used to indicate that the third electronic device sets a communication status of a third communication port to a third state, wherein
in the third state, the third electronic device receives and sends call data of the first call through the third communication port.

16. The method according to claim 14, wherein the first electronic device and the third electronic device are in a connected state, and in the call process of the first call, the method further comprises:
transceiving call signaling of the first call with the first electronic device in real time.

17. A call handover method, applied to a second electronic device and comprising:
receiving call hold signaling sent by a first electronic device through a server in a process of a first call between the first electronic device and the second electronic device, wherein the call hold signaling is used to request to hold a communication connection between the first electronic device and the second electronic device, and the first electronic device has a communication connection with a third electronic device; and
sending call hold feedback signaling to the server, wherein
the call hold feedback signaling is used to indicate holding the communication connection between the first electronic device and the second electronic device.

18. The method according to claim 17, wherein after the sending call hold feedback signaling to the server, the method further comprises:
receiving call handover feedback signaling from the server; and
sending processing feedback signaling to the server, wherein the processing feedback signaling is used to indicate that call data of the first call is transmitted between the second electronic device and the third electronic device.

19. The method according to claim 17, wherein the call handover feedback signaling is further used to indicate that the second electronic device sets a communication status of a fourth communication port to a third state, wherein
in the third state, the fourth communication port receives and sends call data of the first call.

20. A call handover apparatus, wherein the apparatus comprises:
a sending module, configured to receive a first message in a process of a first call between a first electronic device and a second electronic device, wherein the first message is used to indicate handover of the first call to a third electronic device, and the third electronic device has a communication connection with the first electronic device, wherein
the sending module is further configured to send call hold signaling to a server; and
a holding module, configured to: after call hold feedback signaling is received from the server, hold a communication connection with the second electronic device through the server, and stop sending call data of the first call to the server; wherein
the call hold signaling is used to request to hold the communication connection between the first electronic device and the second electronic device; and
the call hold feedback signaling is used to indicate holding the communication connection between the first electronic device and the second electronic device.

21. The apparatus according to claim 20, wherein
the receiving a first message comprises either of the following: receiving a first input and receiving a message that a power parameter of the first electronic device is lower than a first threshold, wherein the first input is used to hand over the first call from the first electronic device to the third electronic device.

22. The apparatus according to claim 20, wherein the apparatus further comprises:
a setting module, configured to set a communication status of a first communication port of the first electronic device to a first state, wherein in the first state, the first electronic device only sends the call data of the first call through the first communication port, wherein
the call hold signaling is further used to indicate that the communication status of the first communication port is the first state, and in the first state, the first communication port only sends the call data of the first call.

23. The apparatus according to claim 20, wherein the apparatus further comprises:
a receiving module, configured to receive the call hold feedback signaling from the server, wherein
the call hold feedback signaling is used to indicate that the second electronic device continues to hold the communication connection with the first electronic device and stops sending the call data to the second electronic device through the server.

24. The apparatus according to claim 23, wherein the call hold feedback signaling is further used to indicate that the first electronic device sets a communication status of a first communication port of the first electronic device to a second state, wherein in the second state, the first communication port only receives the call data of the first call; and
in a case that the call hold feedback signaling sent by the server is received, the apparatus further comprises:
a setting module, configured to set the communication status of the first communication port of the first electronic device to the second state.

25. The apparatus according to claim 20, wherein the first electronic device and the third electronic device are in a connected state, and in the call process of the first call,
the sending module is further configured to transmit call signaling of the first call to the third electronic device in real time.

26. A call handover apparatus, wherein the apparatus comprises:
a receiving module, configured to receive call hold signaling from a first electronic device in a process of a first call between the first electronic device and a second electronic device, wherein the first electronic device has a communication connection with a third electronic device; and
a sending module, configured to send call handover signaling to the third electronic device in a case that a communication connection is held between the first electronic device and the second electronic device; wherein
the receiving module is further configured to receive call handover feedback signaling fed back by the third electronic device; wherein
the call hold signaling is used to request to hold the communication connection between the first electronic device and the second electronic device, the call handover signaling is used to request to hand over the first call to the third electronic device, and the call handover feedback signaling is used to indicate that the first call has been handed over to the third electronic device.

27. The apparatus according to claim 26, wherein
the sending module is further configured to send the call hold signaling to the second electronic device;
the receiving module is further configured to receive call hold feedback signaling fed back by the second electronic device; and
the sending module is further configured to send the call hold feedback signaling to the first electronic device; wherein
the call hold feedback signaling is used to indicate holding the communication connection between the first electronic device and the second electronic device.

28. The apparatus according to claim 26, wherein
the sending module is further configured to send the call handover feedback signaling to the second electronic device; and
the receiving module is further configured to receive processing feedback signaling from the second electronic device, wherein the processing feedback signaling is used to indicate that call data of the first call is transmitted between the second electronic device and the third electronic device.

29. The apparatus according to claim 26, wherein the call hold signaling is further used to indicate that a communication status of a first communication port of the first electronic device is a first state, wherein
in the first state, the first communication port of the first electronic device only sends call data of the first call.

30. The apparatus according to claim 26, wherein the call hold feedback signaling is further used to indicate that the first electronic device sets a communication status of a first communication port of the first electronic device to a second state, wherein
in the second state, the first communication port of the first electronic device only receives call data of the first call.

31. The apparatus according to claim 26, wherein the call handover signaling is used to indicate that the third electronic device sets a communication status of a third communication port of the third electronic device to a third state, wherein
in the third state, the third communication port of the third electronic device receives and sends call data of the first call.

32. The apparatus according to claim 26, wherein the call handover feedback signaling is used to indicate that the second electronic device sets a communication status of a fourth communication port of the second electronic device to a third state, wherein
in the third state, the fourth communication port of the second electronic device receives and sends call data of the first call.

33. A call handover apparatus, wherein the apparatus comprises:
a receiving module, configured to receive call handover signaling sent by a server in a process of a first call between a first electronic device and a second electronic device, wherein a communication connection is held between the first electronic device and the second electronic device; and
a sending module, configured to send call handover feedback signaling to the server; wherein
the call handover signaling is used to request to hand over the first call to a third electronic device, and the call handover feedback signaling is used to indicate that the first call has been handed over to the third electronic device.

34. The apparatus according to claim 33, wherein the call handover signaling is used to indicate that the third electronic device sets a communication status of a third communication port to a third state, wherein
in the third state, the third electronic device receives and sends call data of the first call through the third communication port.

35. The apparatus according to claim 33, wherein the first electronic device and the third electronic device are in a connected state, and in the call process of the first call, the apparatus further comprises:
a transceiver module, configured to transceive call signaling of the first call with the first electronic device in real time.

36. A call handover apparatus, wherein the apparatus comprises:
a receiving module, configured to receive call hold signaling sent by a first electronic device through a server in a process of a first call between the first electronic device and a second electronic device, wherein the call hold signaling is used to request to hold a communication connection between the first electronic device and the second electronic device, and the first electronic device has a communication connection with a third electronic device; and
a sending module, configured to send call hold feedback signaling to the server, wherein
the call hold feedback signaling is used to indicate holding the communication connection between the first electronic device and the second electronic device.

37. The apparatus according to claim 36, wherein
the receiving module is further configured to receive call handover feedback signaling from the server; and
the sending module is further configured to send processing feedback signaling to the server, wherein the processing feedback signaling is used to indicate that call data of the first call is transmitted between the second electronic device and the third electronic device.

38. The apparatus according to claim 36, wherein the call handover feedback signaling is further used to indicate that the second electronic device sets a communication status of a fourth communication port to a third state, wherein
in the third state, the fourth communication port receives and sends call data of the first call.

39. An electronic device, comprising a processor and a memory, wherein a program or instructions are stored in the memory and executable on the processor, and when the program or instructions are executed by the processor, the call handover method according to any one of claims 1 to 6 is implemented, or the call handover method according to any one of claims 7 to 13 is implemented, or the call handover method according to any one of claims 14 to 16 is implemented, or steps of the call handover method according to any one of claims 17 to 19 are implemented.

40. A readable storage medium, wherein the readable storage medium stores a program or instructions, and when the program or instructions are executed by a processor, the call handover method according to any one of claims 1 to 6 is implemented, or the call handover method according to any one of claims 7 to 13 is implemented, or the call handover method according to any one of claims 14 to 16 is implemented, or steps of the call handover method according to any one of claims 17 to 19 are implemented.
